# FASCICULE DE BREVET EUROPEEN

(11) **EP 2 569 146 B1**
(45) Date de publication et mention de la délivrance du brevet: **01.04.2020**
(21) Numéro de dépôt: 11723521.8
(22) Date de dépôt: 28.04.2011
(51) Int. Cl.: B29C 70/48, B29C 70/54, B29C 33/30

(54) **DISPOSITIF POUR LA FABRICATION D'UNE PIÈCE COMPOSITE PAR INJECTION DE RÉSINE**
VORRICHTUNG ZUR HERSTELLUNG EINES VERBUNDTEILS MITTELS HARZSPRITZGUSS
DEVICE FOR MANUFACTURING A COMPOSITE PART BY RESIN INJECTION MOULDING

(30) Priorité: 10.05.2010 FR 1053615
(43) Date de publication de la demande: 20.03.2013
(73) Titulaire: Société Lorraine de Construction Aéronautique, 57190 Florange (FR); Arts & Metiers Paris Tech, 57070 Metz (FR); Le Pole De Plasturgie De L'Est, 57506 Saint Avold (FR); Ateliers Cini, 54510 Tomblaine (FR)
(72) Inventeur: HURLIN, Hervé, F-91430 Igny (FR); MARTIN, Patrick, F-54600 Villers-les-Nancy (FR); CASTAGNET, Florence, F-78140 Velizy-Villacoublay (FR); D'ACUNTO, Alain, F-57640 Saint Barbe (FR); MIHALUTA, Marius, F-57000 Metz (FR); PERRIN, François, F-57420 Pontoy (FR); BETTEGA, Louis, F-57220 Boucheporn (FR); CAUCHOIS, Jean-Pierre, F-67510 Obersteinbach (FR); CINI, Jérome, F-54770 Laitre s/s Amance (FR); MANGENOT, Richard, F-54115 Battigny (FR)
(74) Mandataire: Delorme, Nicolas
(86) Numéro de dépôt international: PCT/FR2011/050961
(87) Numéro de publication internationale: WO 2011/141660

(56) Documents cités:
- US-A- 5 686 038
- US-A- 6 146 122
- US-A1- 2010 044 899

## Description

L'invention se rapporte à un dispositif de fabrication de pièces en matériau composite par moulage par transfert de résine et d'autre part, à un procédé de mise en œuvre dudit dispositif.

Plusieurs procédés de moulage connus par imprégnation de fibres avec de la résine peuvent être utilisés pour réaliser les pièces en matériau composite et, notamment, les procédés de moulage employant des moules fermés.

En premier lieu, on peut citer le procédé de moulage par transfert de résine ou RTM, pour "Resin Transfert Molding".

Dans ce procédé RTM, un ensemble d'éléments fibreux est positionné de manière particulière autour d'un support et l'ensemble est placé à l'intérieur d'un moule fermé dont la forme générale correspond à celle de la pièce à réaliser.

Dans le procédé RTM traditionnel, ce moule est constitué d'un moule femelle ou matrice et d'une partie contre-moule ou poinçon.

On injecte alors une résine dans le moule puis on la polymérise en lui apportant de l'énergie. Les molécules de cette résine commencent alors à se lier entre elles et à former un réseau solide. On obtient ainsi une pièce rigide en matériau composite formé de fibres et de résine polymérisée.

On peut, également, citer le procédé de moulage par infusion de résine.

De façon générale, un tel procédé met en œuvre plusieurs étapes parmi lesquelles figure la mise en place d'éléments de renfort fibreux sur la forme d'un moule.

Le moule est ensuite refermé par l'intermédiaire d'un couvercle souple permettant le passage contrôlé d'une résine qui va infuser à l'intérieur des éléments de renfort fibreux puis polymériser, afin de donner une pièce rigide.

La propagation de la résine se fait par une force motrice créée par une dépression en certains points du couvercle, vers lesquels la résine introduite dans le moule se déplace.

Dans le procédé d'infusion traditionnel, l'outillage de moulage est ainsi formé d'un moule matrice et d'un couvercle étanche tel qu'une bâche comme partie contre moule.

Ces procédés, qu'ils soient RTM standard ou moulage par infusion de résine, sont des technologies dans lesquelles l'outillage de moulage est lourd et conçu pour une forme de pièce spécifique destinée à être réalisée. Ceci engendre des coûts élevés d'outillage pour pouvoir produire des pièces très variées.

De plus, cet outillage peut avoir une longévité très limitée. En effet, on comprend que, dans un outillage RTM standard, la détérioration du moule matrice ou du contre-moule ou des deux implique la détérioration de l'outillage ainsi constitué dans son ensemble.

Enfin, de part la mise au point complexe d'un outillage de moulage adapté à un type spécifique de pièce en matériau composite, ces technologies sont limitées aux formes de pièces en matériau composite peu ou moyennement complexes, dont les caractéristiques sont peu élaborées.

La demande publiée sous le no. US 2010/0044899 décrit un procédé pour contrôler la géométrie d'une pièce composite.

La demande publiée sous le no. FR 2 941 397 fournit un dispositif permettant d'améliorer la fabrication de pièces composites et de répondre aux inconvénients précités.

Toutefois, certaines difficultés subsistent dans la fabrication de pièces en matériaux composites par ces techniques d'infusion.

Une difficulté majeure est le respect du positionnement des zones de singularités telles que des renforcements, sandwich, inserts, par exemple, et ce notamment dans les pièces de précision fabriquées entre autres pour des applications aéronautiques.

En effet, ces singularités dans les pièces composites sont positionnées pour optimiser notamment les passages d'efforts dans la pièce et sa tenue mécanique. Leur positionnement précis est donc essentiel.

La présente invention vise à pallier l'inconvénient précédemment mentionné et consiste pour ce faire en un dispositif de fabrication d'une pièce en matériau composite par moulage par transfert de résine selon la revendication 1, comprenant un moule de fabrication dans lequel est destiné à être disposée au moins une préforme de la pièce destinée à être imprégnée de résine lors du processus de transfert de résine, le moule étant subdivisé en une matrice et un ou plusieurs éléments structurels mobiles destinés à être indexés sur la matrice, l'ensemble formant, après assemblage, une empreinte correspondant à la forme de la pièce à fabriquer, caractérisé en ce que le moule est associé à au moins un cadre de mise en position possédant un faible coefficient de dilatation thermique linéaire dans au moins une direction, le cadre de mise en position étant conçu de manière à permettre l'indexation et le maintien d'un ou plusieurs éléments structurels mobiles, correspondant à au moins une singularité, sur la matrice.

Ainsi, en prévoyant l'association d'un cadre de mise en position possédant un faible coefficient de dilatation linéaire selon une ou plusieurs directions selon les cas, et plus généralement donc les déformations de dilatation sont stables ou maîtrisées, il est possible de maintenir en position précise l'ensemble des éléments destinés au moulage des singularités (renforts, sandwich, etc ...) de la pièce composite.

Cette démarche permet de réaliser des pièces avec un outillage de base, notamment une matrice, à faible coût, seuls les éléments nécessitant un positionnement précis étant réalisés dans des matériaux techniques plus coûteux.

Avantageusement, le cadre de mise en position possède un faible coefficient de dilatation thermique linéaire selon les trois directions de l'espace.

Préférentiellement le maintien des éléments structurels s'effectue au moins en partie par un moyen de pression équipant le cadre de mise en position ou par un degré de liberté perpendiculaire à la pièce composite. Préférentiellement encore, le moyen de pression est situé au niveau d'un index de position de l'élément structurel correspondant.

Idéalement ce mécanisme de pression garantit une pression de compactage constante malgré la réduction d'épaisseur de la préforme (fibres sèches).

De manière préférentielle, la matrice est réalisée à base d'aluminium.

Avantageusement, le cadre de mise en position est équipé d'au moins un pied d'indexation support.

Selon une variante de réalisation, la matrice présente une forme plane.

Préférentiellement, les éléments structurels mobiles (démontables) sont des blocs géométriques tridimensionnels indépendants dont la forme et les dimensions sont adaptées à la forme et aux dimensions de la pièce à fabriquer.

Avantageusement, le dispositif comprend au moins un moyen d'injection de résine.

De manière complémentaire, le dispositif pourra également comprendre les options suivantes :
- les éléments structurels démontables pourront inclure des noyaux souples ou rigides de tout type dont la forme et les dimensions sont adaptées aux structures creuses.
- les éléments structurels sont aptes à assurer un rôle d'évent.
- le dispositif comprend des moyens d'injection adaptés pour réaliser une imprégnation de manière simultanée ou séquencée de la préforme avec la résine injectée.
- les moyens d'injection sont répartis sur la surface du moule de sorte qu'elle favorise la diffusion de la résine de façon transverse et/ou laminaire.
- le dispositif comprend, en outre, un système d'étanchéité des éléments structurels vis-à-vis de la résine injectée dans le moule de fabrication.

La présente invention se rapporte également à un procédé de mise en œuvre du dispositif de fabrication d'une pièce en matériau composite par moulage par injection de résine selon la revendication 10, qui comprend les étapes visant à :
- indexer un ou plusieurs éléments structurels mobiles du moule sur la matrice du moule à l'aide du cadre de mise en position de sorte que l'ensemble forme, après assemblage, une empreinte correspondant à la forme de la pièce à fabriquer.
- exercer une force de maintien en position et de compactage des éléments structurels indexés à l'aide dudit cadre de mise en position,
- procéder au préformage de la pièce et notamment des fibres sèches
- procéder au moulage de la pièce par injection de résine.

De manière avantageuse, on réalise une imprégnation transverse par rapport à un plan de la préforme et/ou une imprégnation laminaire par rapport à ce plan de la préforme.

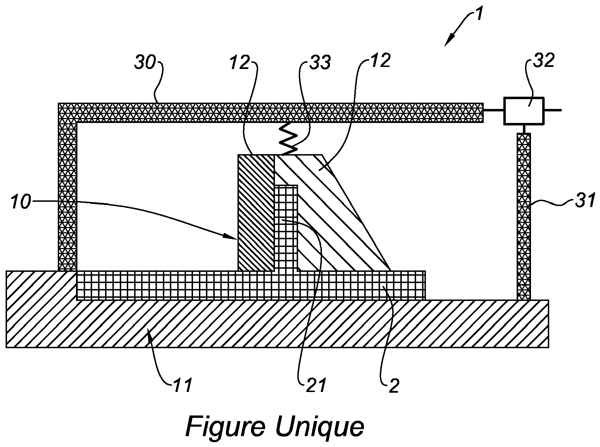

L'invention sera mieux comprise à la lumière de la description détaillée qui suit en regard du dessin annexé dans lequel la figure unique est une représentation schématique en coupe transversale d'un dispositif selon l'invention.

Le principe général du dispositif modulaire comprenant une matrice et des éléments structurels mobiles indexés sur la matrice peut être trouvé dans la demande publiée sous le no. FR 2 941 397.

En substance, la fabrication d'une pièce en matériau composite consiste essentiellement à mouler grâce à un dispositif de fabrication adapté un élément composite par injection d'une résine liquide dans une armature de fibres de renfort essentiellement sèches préalablement préformées suivant la forme du profil de la pièce et prédisposées dans un moule fermé.

Un tel dispositif 1 de moulage est représenté schématiquement sur la figure unique.

Ce dispositif 1 comprend un moule 10 définissant une cavité de moulage destinée à recevoir une préforme 2 susceptible d'être imprégnée de résine pour réaliser la pièce en matériau composite.

Le moule 10 est subdivisé en une matrice 11 de moulage sur laquelle vont venir reposer et être indexés un ou plusieurs éléments structurels 12 de moulage indépendants et mobiles de sorte que l'ensemble forme, après assemblage, une empreinte correspondant à la forme du profil de la pièce à concevoir.

La matrice 11 de moulage est, en l'espèce et à titre d'exemple seulement, plane.

Les éléments structurels 12, quant à eux, sont aptes à être déplacés sur la matrice de moulage 11 en fonction de la forme des pièces à réaliser. Ce sont des blocs géométriques tridimensionnels dont la forme, les dimensions, l'épaisseur et le positionnement sur la matrice 11 sont adapatés suivant la forme du profil de la pièce à réaliser. Ils respectent, ainsi, les contraintes géométriques, dimensionnelles et d'épaisseur de la pièce.

Ces éléments structurels permettent notamment de réaliser des singularités, tels que des renforts 21, par exemple, et les positionner en fonction de chaque pièce à réaliser.

En pratique, pour imprégner la préforme 1 avec de la résine, le moule 10 est relié à un conteneur de résine (non représenté) lui-même placé à l'intérieur de moyens de chauffage (non représentés) tels qu'un four ou tout autre moyen de chauffage approprié. Le conteneur est relié au moule 10 par des moyens d'injection de résine.

Par ailleurs, le moule 10 pourra être associé à une bâche destinée à refermer le moule 10 et assurer le rôle de contre moule.

Le moule 10 est également équipé de joints périphériques d'étanchéité assurant l'étanchéité entre la bâche et le moule 10, l'ensemble constituant ainsi un volume étanche matérialisant le volume de la pièce à réaliser.

Conformément à l'invention et afin de maintenir les éléments structurels 12 précisément en position au cours de la phase d'injection de résine, le dispositif 1 comprend également un cadre de mise en position 30 maintenu à l'aide d'un pied d'indexation 31 par l'intermédiaire d'une liaison 32 entre ledit cadre 30 et le pied 31.

Conformément à l'invention encore, ce cadre de mise en position possède un faible coefficient de dilatation thermique linéaire dans l'axe de la matrice 11**.**

Le cadre de mise en position 30 possède également un moyen de pression 33 élastique (ressort par exemple) apte à exercer sur les éléments structurels 12 une pression de maintien en position. La pression de compactage peut également résulter de la dépression présente dans le contre moule. Les éléments de mise en position présentent dans ce cas un degré de liberté dans la direction perpendiculaire à la pièce composite.

L'opération de préformage et de compactage de fibres sèches permet d'obtenir un taux volumique important. Un liant peut être utilisé afin de fixer le volume de fibres obtenu. Dans ce cas, un cycle de polymérisation du liant est appliqué pendant l'opération de préformage. Ce concept d'outillage permet de réaliser l'opération de préformage et de moulage dans le même outillage.

Ainsi, grâce au cadre de mise en position, les éléments structurels 12 peuvent être précisément placés et maintenus en position indépendamment de toute déformation par dilatation de la matrice 11.

## Revendications

1. Dispositif (1) de fabrication d'une pièce en matériau composite par moulage par transfert de résine comprenant un moule (10) de fabrication dans lequel est destiné à être disposé au moins une préforme (2) de la pièce destinée à être imprégnée de résine lors du processus de transfert de résine, le moule étant subdivisé en une matrice (11) et un ou plusieurs éléments structurels (12) mobiles destinés à être indexés sur la matrice, l'ensemble formant, après assemblage, une empreinte correspondant à la forme de la pièce à fabriquer, **caractérisé en ce que** le moule est associé à au moins un cadre (30) de mise en position possédant un faible coefficient de dilatation thermique linéaire dans au moins une direction, le cadre de mise en position étant conçu de manière à permettre l'indexation et le maintien d'un ou plusieurs éléments structurels mobiles, correspondant à au moins une singularité (21), sur la matrice.

2. Dispositif (1) selon la revendication 1, **caractérisé en ce que** le cadre (30) de mise en position possède un faible coefficient de dilatation thermique linéaire selon les trois directions de l'espace.

3. Dispositif (1) selon l'une quelconque des revendications 1 ou 2, **caractérisé en ce que** le maintien des éléments structurels (12) s'effectue au moins en partie par un moyen de pression (33) équipant le cadre (30) de mise en position, ou par un degré de liberté perpendiculaire à la pièce composite.

4. Dispositif (1) selon la revendication 3, **caractérisé en ce que** le moyen de pression (33) est situé au niveau d'un index de position de l'élément structurel (12) correspondant.

5. Dispositif (1) selon l'une quelconque des revendications 1 à 4, **caractérisé en ce que** la matrice (11) est réalisée à base d'aluminium.

6. Dispositif (1) selon l'une quelconque des revendications 1 à 5, **caractérisé en ce que** le cadre (30) de mise en position est équipé d'au moins un pied d'indexation (31) support.

7. Dispositif (1) selon l'une quelconque des revendications 1 à 6, **caractérisé en ce que** la matrice (11) présente une forme plane.

8. Dispositif (1) selon l'une des revendications précédentes **caractérisé en ce que** les éléments structurels (12) mobiles sont des blocs géométriques tridimensionnels indépendants dont la forme et les dimensions sont adaptées à la forme et aux dimensions de la pièce à fabriquer.

9. Dispositif (1) selon l'une quelconque des revendications 1 à 8, **caractérisé en ce qu'**il comprend au moins un moyen d'injection de résine.

10. Procédé de mise en œuvre d'un dispositif (1) de fabrication d'une pièce en matériau composite par moulage par injection de résine selon l'une quelconques des revendications 1 à 9 qui comprend les étapes visant à :
- indexer un ou plusieurs éléments structurels (12) mobiles du moule sur la matrice (11) du moule à l'aide du cadre (30) de mise en position de sorte que l'ensemble forme, après assemblage, une empreinte correspondant à la forme de la pièce à fabriquer.
- exercer une force de maintien et de compactage en position des éléments structurels indexés à l'aide dudit cadre de mise en position
- procéder au préformage de la pièce
- procéder au moulage de la pièce par injection de résine.

## Patentansprüche

1. Vorrichtung (1) zur Herstellung eines Werkstücks aus Verbundmaterial durch Harztransferformen, umfassend eine Herstellungsform (10), in der mindestens eine Vorform (2) des Werkstücks bestimmt ist, angeordnet zu werden, die dazu bestimmt ist, beim Harztransferprozess mit Harz imprägniert zu werden, wobei die Form in eine Matrize (11) und ein oder mehrere bewegliche Strukturelemente (12) unterteilt ist, die dazu bestimmt sind, an der Matrize indexiert zu werden, wobei die Baugruppe nach dem Zusammenbauen einen Abdruck bildet, der der Form des herzustellenden Werkstücks entspricht, **dadurch gekennzeichnet, dass** die Form mit mindestens einem Rahmen (30) zum Positionieren verknüpft ist, der in mindestens einer Richtung einen geringen linearen Wärmeausdehnungskoeffizienten besitzt, wobei der Positionierrahmen so konzipiert ist, dass er das Indexieren und das Halten eines oder mehrerer beweglicher Strukturelemente, die mindestens einer Singularität (21) entsprechen, an der Matrize ermöglicht.

2. Vorrichtung (1) nach Anspruch 1, **dadurch gekennzeichnet, dass** der Positionierrahmen (30) in den drei Richtungen des Raumes einen geringen linearen Wärmeausdehnungskoeffizienten besitzt.

3. Vorrichtung (1) nach einem der Ansprüche 1 oder 2, **dadurch gekennzeichnet, dass** das Halten der Strukturelemente (12) mindestens zum Teil durch ein Druckmittel (33), das den Positionierrahmen (30) ausstattet, oder durch einen Freiheitsgrad senkrecht zum Verbundwerkstück erfolgt.

4. Vorrichtung (1) nach Anspruch 3, **dadurch gekennzeichnet, dass** sich das Druckmittel (33) im Bereich eines Positionsindex des entsprechenden Strukturelements (12) befindet.

5. Vorrichtung (1) nach einem der Ansprüche 1 bis 4, **dadurch gekennzeichnet, dass** die Matrize (11) auf Aluminiumbasis ausgeführt ist.

6. Vorrichtung (1) nach einem der Ansprüche 1 bis 5, **dadurch gekennzeichnet, dass** der Positionierrahmen (30) mit mindestens einem Träger-Indexierfuß (31) ausgestattet ist.

7. Vorrichtung (1) nach einem der Ansprüche 1 bis 6, **dadurch gekennzeichnet, dass** die Matrize (11) eine ebene Form aufweist.

8. Vorrichtung (1) nach einem der vorstehenden Ansprüche, **dadurch gekennzeichnet, dass** die beweglichen Strukturelemente (12) unabhängige dreidimensionale geometrische Blöcke sind, deren Form und deren Abmessungen auf die Form und auf die Abmessungen des herzustellenden Werkstücks angepasst sind.

9. Vorrichtung (1) nach einem der Ansprüche 1 bis 8, **dadurch gekennzeichnet, dass** sie mindestens ein Harzeinspritzmittel umfasst.

10. Verfahren zum Einsetzen einer Vorrichtung (1) zur Herstellung eines Werkstücks aus Verbundmaterial durch Harzspritzformen nach einem der Ansprüche 1 bis 9, das die Schritte umfasst, die darauf zielen:
- ein oder mehrere bewegliche Strukturelemente (12) der Form mit Hilfe des Positionierrahmens (30) derart an der Matrize (11) der Form zu indexieren, dass die Baugruppe nach dem Zusammenbauen einen Abdruck bildet, der der Form des herzustellenden Werkstücks entspricht
- eine Kraft zum Halten und Verdichten an Position der mit Hilfe des Positionierrahmens indexierten Strukturelemente auszuüben
- das Vorformen des Werkstücks vorzunehmen
- das Formen des Werkstücks durch Einspritzen von Harz vorzunehmen.

## Claims

1. A device (1) for manufacturing a part made of a composite material by resin transfer molding comprising a manufacturing mold (10) into which is intended to be disposed at least one preform (2) of the part intended to be impregnated with resin during the resin transfer process, the mold being split into a die (11) and one or several movable structural element(s) (12) intended to be indexed on the die, the set forming, after assembly, an imprint corresponding to the shape of the part to be manufactured, **characterized in that** the mold is associated to at least one positioning frame (30) having a low coefficient of thermal expansion which is linear in at least one direction, the positioning frame being designed so as to enable the indexing and the holding of one or several movable structural element(s), corresponding to at least one singularity (21), on the die.

2. The device (1) according to claim 1, **characterized in that** the positioning frame (30) has a low coefficient of thermal expansion which is linear according to the three directions of space.

3. The device (1) according to any one of claims 1 or 2, **characterized in that** the holding of the structural elements (12) is performed at least partially by a pressing means (33) equipping the positioning frame (30), or through a degree of freedom perpendicular to the composite part.

4. The device (1) according to claim 3, **characterized in that** the pressing means (33) is located at the level of a position index of the corresponding structural element (12).

5. The device (1) according to any one of claims 1 to 4, **characterized in that** the die (11) is made of an aluminum-based material.

6. The device (1) according to any one of claims 1 to 5, **characterized in that** the positioning frame (30) is equipped with at least one support indexing foot (31).

7. The device (1) according to any one of claims 1 to 6, **characterized in that** the die (11) has a planar shape.

8. The device (1) according to any one of the preceding claims, **characterized in that** the movable structural elements (12) consist of independent three-dimensional geometric blocks whose shape and dimensions are adapted to the shape and to the dimensions of the part to be manufactured.

9. The device (1) according to any one of claims 1 to 8, **characterized in that** it comprises at least one resin injection means.

10. A method for implementing a device (1) for manufacturing a part made of a composite material by resin injection molding according to any one of claims 1 to 9 which comprises the steps aiming at:
- indexing one or several movable structural element(s) (12) of the mold on the die (11) of the mold using the positioning frame (30) so that the set forms, after assembly, an imprint corresponding to the shape of the part to be manufactured,
- exerting a force for holding and compacting in position the indexed structural elements using the positioning frame,
- proceeding with the preforming of the part,
- proceeding with the molding of the part by resin injection.
